(19) **Europäisches Patentamt / European Patent Office / Office européen des brevets**

(11) **EP 3 792 744 A1**

(12) **EUROPEAN PATENT APPLICATION**

(43) Date of publication:
**17.03.2021   Bulletin 2021/11**

(51) Int Cl.:
***G06F 3/06*** (2006.01)

(21) Application number: **20194080.6**

(22) Date of filing: **02.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.09.2019   JP 2019164546**

(71) Applicant: **FUJITSU LIMITED**
**Kanagawa 211-8588 (JP)**

(72) Inventors:
 • **Furuta, Tomonori**
  **Kanagawa, 211-8588 (JP)**
 • **Uno, Tomohiro**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS AND INFORMATION PROCESSING PROGRAM**

(57)   An information processing apparatus includes: a division processing unit that, each time when the division processing unit receives a write request of write data, divides the write data into a plurality of unit bit strings having a fixed size, calculates a complexity of a data value indicated by each of the plurality of unit bit strings, determines a division position in the write data based on a variation amount of the complexity, and divides the write data into a plurality of chunks by dividing the write data at the division position; and a deduplication unit that stores data of the plurality of chunks in a storage device while performing deduplication.

FIG. 1

**Description**

FIELD

The embodiments discussed herein are related to an information processing apparatus and an information processing program.

BACKGROUND

As a technique of reducing the amount of data stored in a storage device, there is a deduplication technique in which data to be stored is divided into chunks and a write operation is controlled to suppress redundant storage of the same data in units of chunks. In this deduplication technique, there are a case where fixed-length chunks are used and a case where variable-length chunk are used, and in many cases, the latter case has higher deduplication efficiency.

As a technique of generating variable-length chunks, for example, a technique is known in which a window having a fixed size is moved on write data, and a division position of chunks is determined based on a hash value of data in the window at each position. Regarding the deduplication technique, there has been also proposed a storage system in which a hash value used for obtaining a cutting point of chunks are made usable for duplication detection.

Related art is disclosed in Japanese National Publication of International Patent Application No. 2014-514618 and Japanese Laid-open Patent Publication No. 2011-65268.

SUMMARY

In the above-described technique of determining the division position of the chunks based on the hash value of the data in the moved window, the division position is determined based on the contents of a bit string in the window. In this technique, the chunk is generated based on only part of a bit string (for example, bit string in the window) in the divided chunk rather than the entire bit string. Accordingly, this technique has a problem that the section appropriate for improving the deduplication efficiency may not be obtained as individual chunks by the division.

In one aspect, an object of the present invention is to provide an information processing apparatus and an information processing program capable of improving deduplication efficiency of data.

In one proposal, there is provided an information processing apparatus including a division processing unit and a deduplication unit as described below. In this information processing apparatus, each time when the division processing unit receives a write request of write data, the division processing unit divides the write data into a plurality of unit bit strings having a fixed size, calculates a complexity of a data value indicated by each of the plurality of unit bit strings, determines a division position in the write data based on a variation amount of the complexity, and divides the write data into a plurality of chunks by dividing the write data at the division position. The deduplication unit stores data of the plurality of chunks in a storage device while performing deduplication.

In another proposal, there is provided an information processing program that causes a computer to execute processing as in the aforementioned information processing apparatus.

In one aspect, it is possible to improve deduplication efficiency of data.

BRIEF DESCRIPTION OF DRAWINGS

FIG. 1 is a diagram illustrating a configuration example and a processing example of an information processing apparatus according to a first embodiment;
FIG. 2 is a diagram illustrating a configuration example of an information processing system according to a second embodiment;
FIG. 3 is a block diagram illustrating a hardware configuration example of a cloud storage gateway;
FIG. 4 is a block diagram illustrating a configuration example of processing functions included in a cloud storage gateway;
FIG. 5 is a diagram illustrating a configuration example of a chunk map table;
FIG. 6 is a diagram illustrating a configuration example of a chunk meta table and a chunk data table;
FIG. 7 is a diagram illustrating a configuration example of chunk groups;
FIG. 8 is an example of a graph illustrating a relationship between a storage amount of actual data and a volume of management data;
FIG. 9 is a diagram illustrating an example of a variable length chunk division method;
FIG. 10 is a first diagram illustrating an example of a relationship between an average size of chunks and a data amount reduction percentage;

FIG. 11 is a second diagram illustrating an example of the relationship between the average size of chunks and the data amount reduction percentage;

FIG. 12 is a diagram illustrating an example of distribution of data values in write data;

FIG. 13 is a diagram illustrating a calculation example of energy field;

FIG. 14 is a graph illustrating an example of an energy field;

FIG. 15 is a diagram illustrating an example of chunk division position determination processing;

FIG. 16 is a flowchart illustrating an example of chunking processing;

FIG. 17 is a diagram illustrating a configuration example of a weight table;

FIG. 18 is a flowchart illustrating an example of energy field calculation processing;

FIG. 19 is a flowchart illustrating an example of a continuity counter updating process;

FIG. 20 is a diagram for explaining minimum point search in the energy field;

FIG. 21 is a flowchart illustrating an example of division position determination processing;

FIG. 22 is a flowchart (part 1) illustrating an example of a file writing processing;

FIG. 23 is a flowchart (part 2) illustrating the example of the file writing processing; and

FIG. 24 is a flowchart illustrating an example of cloud transfer processing.

DESCRIPTION OF EMBODIMENTS

Description is given below of embodiments of the present invention with reference to the drawings.

[First Embodiment]

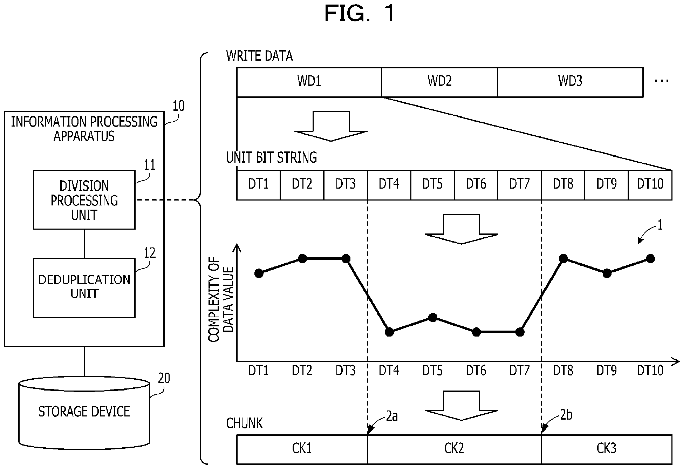

FIG. 1 is a diagram illustrating a configuration example and a processing example of an information processing apparatus according to a first embodiment. The information processing apparatus 10 illustrated in FIG. 1 includes a division processing unit 11 and a deduplication unit 12. The processing of the division processing unit 11 and the deduplication unit 12 is achieved by, for example, causing a processor (not illustrated) included in the information processing apparatus 10 to execute a program. A storage device 20 is also coupled to the information processing apparatus 10. The storage device 20 may be mounted in the information processing apparatus 10.

Each time when the division processing unit 11 receives a write request of write data into the storage device 20, the division processing unit 11 divides the write data into multiple chunks. In this division processing, variable-length chunks are generated. The deduplication unit 12 performs deduplication on pieces of data of the respective chunks into which the write data is divided, and stores the pieces of data in the storage device 20.

Processing of the division processing unit 11 will be further described below. In the example of FIG. 1, it is assumed that writing of pieces of write data WD1, WD2, WD3, ... is requested in this order. When dividing each of the pieces of write data WD1, WD2, WD3, ... into chunks, the division processing unit 11 first divides each of the pieces of write data WD1, WD2, WD3, ... into unit bit strings of a fixed size. Each unit bit string is, for example, a bit string of 1 byte.

In the example of FIG. 1, it is assumed that the write data WD1 is divided into unit bit strings DT1 to DT10. The division processing unit 11 calculates a complexity of a data value in each of the unit bit strings DT1 to DT10 based on the data value. The data value is a numerical value expressed by each unit bit string. The graph 1 in FIG. 1 illustrates an example of distribution of the complexity of the data value in each of the unit bit strings DT1 to DT10.

The division processing unit 11 determines a division position for dividing the write data into chunks based on a variation amount of the calculated complexity. For example, in the case where there are two regions that greatly vary in a distribution range of complexity, it is assumed that the bit strings in the respective regions have different data patterns. Accordingly, the division processing unit 11 determines, for example, a position where the complexity greatly varies (for example, a position where the absolute value of the slope of the complexity takes a local extreme value) as the division position.

In the example of FIG. 1, the complexity greatly varies between the unit bit string DT3 and the unit bit string DT4, and the complexity greatly varies also between the unit bit string DT7 and the unit bit string DT8. In this case, a position 2a between the unit bit string DT3 and the unit bit string DT4 and a position 2b between the unit bit string DT7 and the unit bit string DT8 are determined as the division positions. In this case, the division processing unit 11 divides the write data WD1 into chunks CK1, CK2, and CK3 by dividing the write data WD1 at the positions 2a and 2b.

The pieces of write data WD2, WD3, ... are also divided into chunks in similar procedures.

In the above processing of the division processing unit 11, the complexity of the data values in the unit bit strings are calculated, and the division position of the chunks is determined based on the variation amount of the complexity. Thus, it is possible to specify a range of a specific data pattern having certain regularity from the bit string of the write data and determine the start position and the end position of this range as the division positions of the chunk.

For example, in the method of determining the division position of the chunks based on the hash value of data in the moved window, the division position is determined based on only the bit string in the window. Therefore, when a range of a specific bit pattern is present in the bit string of the write data, even if it is possible to determine the end position of this range as the division position, the start position of this range may not be determined as the division position.

Meanwhile, the processing of the division processing unit 11 increases the possibility that both the start position and the end position of the range of the specific data pattern as described above may be determined as the division positions of the chunk. Therefore, dividing multiple pieces of write data into chunks by such a method and storing the pieces of data of the divided chunks in the storage device 20 while performing deduplication increases the possibility of detecting portions including the same data pattern and performing deduplication on these portions. This may increase the deduplication efficiency and reduce the volume of data stored in the storage device 20.

For example, this processing increases the possibility that, when the write data is updated by inserting or changing part of the write data, the start position and the end position of the range in which the insertion or the change is made are determined as the division positions. Accordingly, the possibility that a bit string immediately in front of the start position and a bit string immediately behind the end position are determined to be redundant with bit strings already stored in the storage device 20 increases, and the deduplication efficiency is improved.

[Second Embodiment]

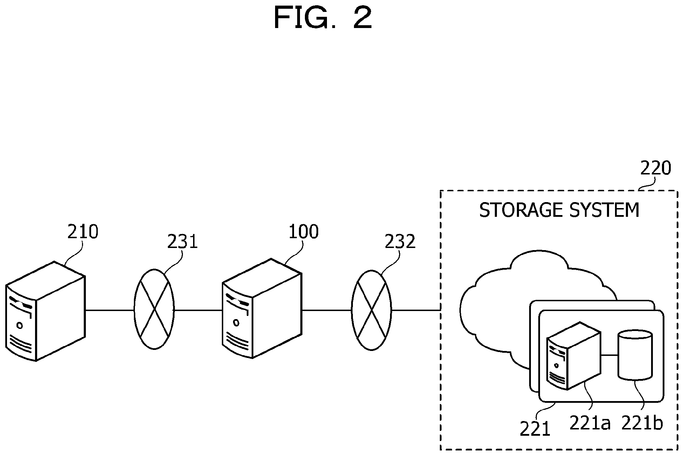

FIG. 2 is a diagram illustrating a configuration example of an information processing system according to a second embodiment. The information processing system illustrated in FIG. 2 includes a cloud storage gateway 100, a network attached storage (NAS) client 210, and a storage system 220. The cloud storage gateway 100 is coupled to the NAS client 210 via a network 231, and is also coupled to the storage system 220 via a network 232. The network 231 is, for example, a local area network (LAN), and the network 232 is, for example, a wide area network (WAN).

The storage system 220 provides a cloud storage service via the network 232. In the following description, a storage area made available to a service user (cloud storage gateway 100 in this example) by a cloud storage service provided by the storage system 220 may be referred to as "cloud storage".

In this embodiment, as an example, the storage system 220 is implemented by an object storage in which data is managed in units of objects. For example, the storage system 220 is implemented as a distributed storage system having multiple storage nodes 221 each including a control server 221a and a storage device 221b. In this case, in each storage node 221, the control server 221a controls access to the storage device 221b, and part of the cloud storage is implemented by a storage area of the storage device 221b. The storage node 221 to be the storage destination of an object from the service user (cloud storage gateway 100) is determined based on information unique to the object.

Meanwhile, the NAS client 210 recognizes the cloud storage gateway 100 as a NAS server that provides a storage area managed by a file system. The storage area is a storage area of the cloud storage provided by the storage system 220. The NAS client 210 then requests the cloud storage gateway 100 to read and write data in units of files according to, for example, the Network File System (NFS) protocol or the Common Internet File System (CIFS) protocol. For example, a NAS server function of the cloud storage gateway 100 allows the NAS client 210 to use the cloud storage as a large-capacity virtual network file system.

The NAS client 210 executes, for example, backup software for data backup. In this case, the NAS client 210 backs up a file stored in the NAS client 210 or a file stored in a server (for example, a business server) coupled to the NAS client 210, to a storage area provided by the NAS server.

The cloud storage gateway 100 is an example of the information processing apparatus 10 illustrated in FIG. 1. The cloud storage gateway 100 relays data transferred between the NAS client 210 and the cloud storage.

For example, the cloud storage gateway 100 receives a file write request from the NAS client 210 and caches a file for which the write request is made in itself by using the NAS server function. The cloud storage gateway 100 divides the file for which the write request is made in units of chunks and stores actual data in the chunks (hereinafter referred to as "chunk data") in the cloud storage. In this case, multiple pieces of chunk data whose total size exceeds a fixed size are grouped as a "chunk group" and the chunk group is transferred to the cloud storage as an object.

At the time of caching the file, the cloud storage gateway 100 divides the file in units of chunks and performs "deduplication" that suppresses redundant storage of chunk data having the same content. The chunk data may also be stored in a compressed state. For example, in a cloud storage service, a fee is charged depending on the amount of data to be stored in some cases. Performing deduplication and data compression may reduce the amount of data stored in the cloud storage and suppress the service use cost.

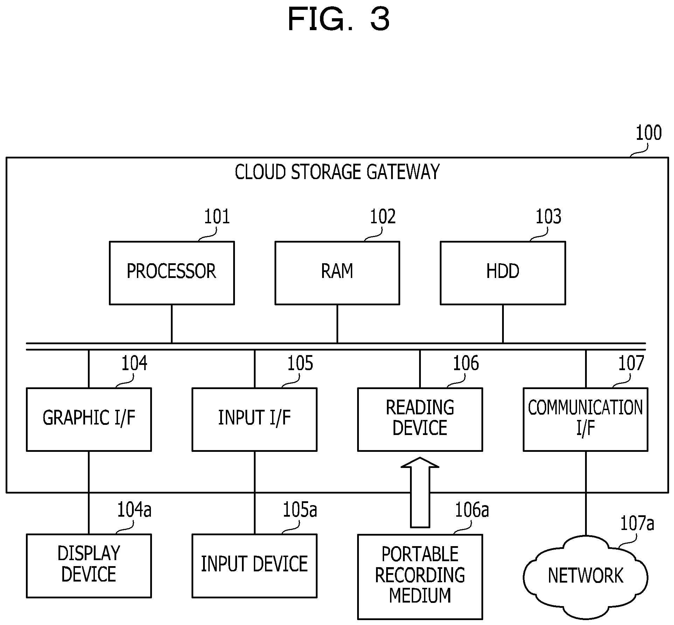

FIG. 3 is a block diagram illustrating a hardware configuration example of the cloud storage gateway. The cloud storage gateway 100 is implemented as, for example, a computer as illustrated in FIG. 3.

The cloud storage gateway 100 includes a processor 101, a random-access memory (RAM) 102, a hard disk drive (HDD) 103, a graphic interface (I/F) 104, an input interface (I/F) 105, a reading device 106, and a communication interface (I/F) 107.

The processor 101 generally controls the entire cloud storage gateway 100. The processor 101 is, for example, a central processing unit (CPU), a microprocessor unit (MPU), a digital signal processor (DSP), an application-specific integrated circuit (ASIC), or a programmable logic device (PLD). The processor 101 may also be a combination of two or more of elements of the CPU, the MPU, the DSP, ASIC, and the PLD.

The RAM 102 is used as a main storage device of the cloud storage gateway 100. At least part of an operating system (OS) program and an application program to be executed by the processor 101 is temporarily stored in the RAM 102. Various kinds of data to be used in processing by the processor 101 are also stored in the RAM 102.

The HDD 103 is used as an auxiliary storage of the cloud storage gateway 100. The OS program, the application program, and various kinds of data are stored in the HDD 103. A different type of nonvolatile storage device such as a solid-state drive (SSD) may be used as the auxiliary storage.

A display device 104a is coupled to the graphic interface 104. The graphic interface 104 displays an image on the display device 104a according to a command from the processor 101. The display device includes a liquid crystal display, an organic electroluminescence (EL) display, and the like.

An input device 105a is coupled to the input interface 105. The input interface 105 transmits a signal outputted from the input device 105a to the processor 101. The input device 105a includes a keyboard, a pointing device, and the like. The pointing device includes a mouse, a touch panel, a tablet, a touch pad, a track ball, and the like.

A portable recording medium 106a is removably mounted on the reading device 106. The reading device 106 reads data recorded in the portable recording medium 106a and transmits the data to the processor 101. The portable recording medium 106a includes an optical disc, a semiconductor memory, and the like.

The communication interface 107 exchanges data with other apparatuses via a network 107a.

The processing functions of the cloud storage gateway 100 may be implemented by the hardware configuration as described above. The NAS client 210 and the control server 221a may also be implemented as computers having the same hardware configuration as that in FIG. 3.

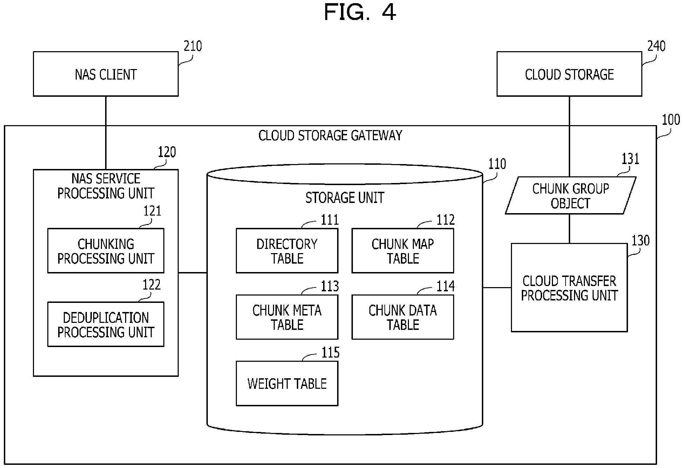

FIG. 4 is a block diagram illustrating a configuration example of processing functions included in the cloud storage gateway. The cloud storage gateway 100 includes a storage unit 110, a NAS service processing unit 120, and a cloud transfer processing unit 130.

The storage unit 110 is implemented as, for example, a storage area of a storage device included in the cloud storage gateway 100, such as the RAM 102 or the HDD 103. The processing of the NAS service processing unit 120 and the cloud transfer processing unit 130 is implemented by, for example, causing the processor 101 to execute a predetermined program.

A directory table 111, a chunk map table 112, a chunk meta table 113, a chunk data table 114, and a weight table 115 are stored in the storage unit 110.

The directory table 111 is a management table for expressing a directory structure in the file system. In the directory table 111, records corresponding to directories (folders) in the directory structure or to files in the directories are registered. In each record, an inode number for identifying a directory or a file is registered. For example, relationships between directories and relationships between directories and files are expressed by registering the inode number of the parent directory in each record.

The chunk map table 112 and the chunk meta table 113 are management tables for managing relationships between files and chunk data and relationships between chunk data and chunk groups. The chunk group includes multiple pieces of chunk data whose total size is equal to or larger than a predetermined size, and is a unit of transfer in the case where the pieces of chunk data are transferred to a cloud storage 240. The chunk data table 114 holds the chunk data. For example, the chunk data table 114 serves as a cache area for actual data of files.

The weight table 115 is a management table referred to in chunking processing in which a file is divided in units of chunks. In the weight table 115, weights used to calculate the complexity of data string are registered in advance.

The NAS service processing unit 120 executes interface processing as a NAS server. For example, the NAS service processing unit 120 receives a file read-write request from the NAS client 210, executes processing depending on the contents of the request, and responds to the NAS client 210.

The NAS service processing unit 120 includes a chunking processing unit 121 and a deduplication processing unit 122. The chunking processing unit 121 is an example of the division processing unit 11 illustrated in FIG. 1, and the deduplication processing unit 122 is an example of the deduplication unit 12 illustrated in FIG. 1.

The chunking processing unit 121 divides actual data of a file for which writing request is made in units of chunks. The deduplication processing unit 122 stores the actual data divided in units of chunks in the storage unit 110 while performing deduplication.

The cloud transfer processing unit 130 transfers the chunk data written in the storage unit 110 to the cloud storage 240 asynchronously with the processing of writing data to the storage unit 110 performed by the NAS service processing unit 120. As described above, data is transferred to the cloud storage 240 in units of objects. In the embodiment, the cloud transfer processing unit 130 generates one chunk group object 131 by using pieces of chunk data included in one chunk group, and transmits the chunk group object 131 to the cloud storage 240.

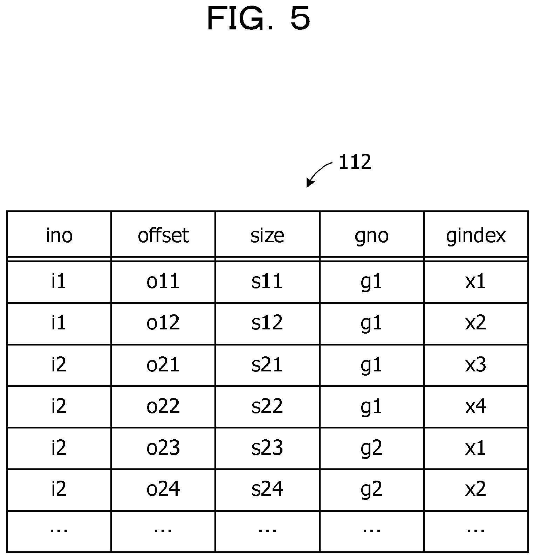

Next, the management tables used in the deduplication processing will be described with reference to FIGs. 5 to 7.

FIG. 5 is a diagram illustrating a configuration example of the chunk map table. The chunk map table 112 is a management table for associating the file and the chunk data with each other. In the chunk map table 112, records having items of "ino", "offset", "size", "gno", and "gindex" are registered. Each record is associated with one chunk generated by dividing the actual data of the file.

"ino" indicates an inode number of the file including the chunk. "offset" indicates an offset amount from the head of the actual data of the file to the head of the chunk. The combination of "ino" and "offset" uniquely identifies the chunk in the file.

"size" indicates the size of the chunk. In the embodiment, the size of the chunk is assumed to be variable. As will be described later, the chunking processing unit 121 determines the division position of the actual data of the file such that chunks including the same data are likely to be generated. Variable-length chunks are thereby generated.

"gno" indicates a group number of the chunk group to which the chunk data included in the chunk belongs, and "gindex" indicates an index number of the chunk data in the chunk group. Registering "ino", "offset", "gno", and "gindex" in the record causes the chunk in the file and the chunk data to be associated with each other.

In the example of FIG. 5, a file with an inode number "i1" is divided into two chunks, and a file with an inode number "i2" is divided into four chunks. Data of the two chunks included in the former file and data of the first and second chunks among the chunks included in the latter file are stored in the storage unit 110 as chunk data belonging to a chunk group with a group number "g1". Data of the third and fourth chunks from the head among the chunks included in the latter file is stored in the storage unit 110 as chunk data belonging to a chunk group with a group number "g2".

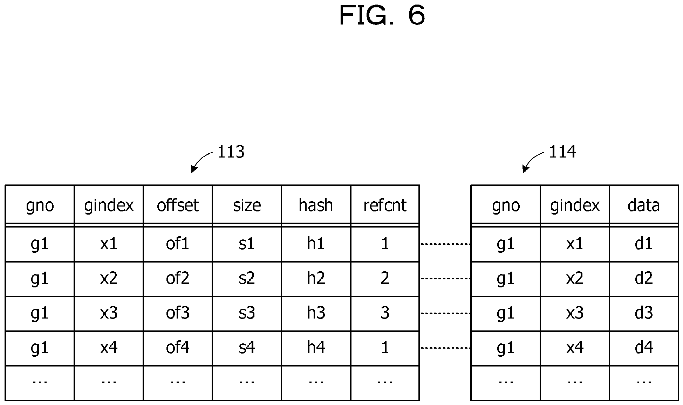

FIG. 6 is a diagram illustrating a configuration example of the chunk meta table and the chunk data table.

The chunk meta table 113 is mainly a management table for associating the chunk data and the chunk group with each other. In the chunk meta table 113, records having items of "gno", "gindex", "offset", "size", "hash", and "refcnt" are registered. Each record is associated with one piece of chunk data.

"gno" indicates the group number of the chunk group to which the chunk data belongs. "gindex" indicates the index number of the chunk data in the chunk group. "offset" indicates offset amount from the head of the chunk group to the head of the chunk data. The combination of "gno" and "gindex" identifies one piece of chunk data, and the combination of "gno" and "offset" determines the storage position of the one piece of chunk data. "size" indicates the size of the chunk data.

"hash" indicates a hash value calculated based on the chunk data. This hash value is used to retrieve the same chunk data as the data of the chunk in the file for which write request is made. "refcnt" indicates a value of a reference counter corresponding to the chunk data. The value of the reference counter indicates how many chunks refer to the chunk data. For example, this value indicates in how many chunks the chunk data is redundant. For example, when the value of the reference counter corresponding to certain values of "gno" and "gindex" is "2", two records in which the same values of "gno" and "gindex" are registered are present in the chunk map table 112.

In the chunk data table 114, records having items of "gno", "gindex", and "data" are registered. The chunk data identified by the "gno" and the "gindex" is stored in "data".

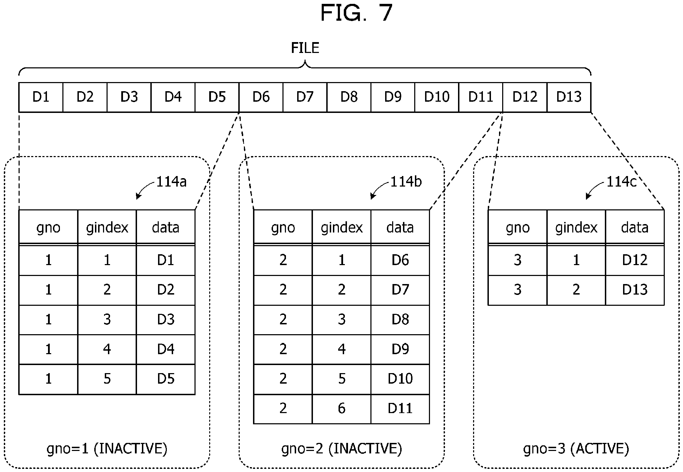

FIG. 7 is a diagram illustrating a configuration example of chunk groups. A method of generating chunk groups will be described by using FIG. 7.

A table 114a illustrated in FIG. 7 is obtained by extracting records for pieces of chunk data belonging to the chunk group with the group number "1" from the chunk data table 114. Similarly, a table 114b illustrated in FIG. 7 is obtained by extracting records for pieces of chunk data belonging to the chunk group with the group number "2" from the chunk data table 114. A table 114c illustrated in FIG. 7 is also obtained by extracting records for pieces of chunk data belonging to the chunk group with the group number "3" from the chunk data table 114.

When the NAS client 210 requests to write a new file or update an existing file, the chunking processing unit 121 divides the actual data of the file in units of chunks. In the example of FIG. 7, it is assumed that the actual data of the file is divided into 13 chunks. Pieces of data of the respective chunks are referred to as pieces of data D1 to D13 from the head. In order to simplify the description, it is assumed that the contents of the pieces of data D1 to D13 are all different (for example, are not redundant). In this case, the deduplication processing unit 122 individually stores pieces of chunk data corresponding to the respective pieces of data D1 to D13 in the storage unit 110.

A group number (gno) and an index number (gindex) in the chunk group indicated by the group number are assigned to each piece of chunk data. The index numbers are assigned to the respective pieces of non-redundant chunk data in the order of generation thereof by file division. When the total size of the pieces of chunk data to which the same group number is assigned reaches a certain amount, the group number is counted up, and the group number after the count up is assigned to the next piece of chunk data.

A state of the chunk group in which the total size of pieces chunk data has not reached the certain amount is referred to as "active" in which the chunk group is capable of accepting the next piece of chunk data. A state of the chunk group in which the total size of pieces of chunk data reaches the certain amount is referred to as "inactive" in which the chunk group is unable to accept the next piece of chunk data.

In the example of FIG. 7, first, the pieces of data D1 to D5 are assigned to the chunk group with the group number "1". Assume that, at this stage, the size of the chunk group with the group number "1" reaches the certain amount and the chunk group becomes inactive. A new group number "2" is then assigned to the next piece of data D6.

Assume that, thereafter, the pieces of data D6 to D11 are assigned to the chunk group with the group number "2", and the chunk group becomes inactive at this stage. A new group number "3" is then assigned to the next piece of data D12. In the example of FIG. 7, the pieces data D12 and D13 are assigned to the chunk group with the group number "3", and at this stage, this chunk group is in the active state. In this case, the group number "3" and the index number "3" are assigned to the piece of chunk data (not illustrated) to be generated next.

The inactivated chunk group is a data unit in the transfer of the actual data in the file to the cloud storage 240. When a certain chunk group becomes inactive, the cloud transfer processing unit 130 generates one chunk group object 131 from this chunk group. In the chunk group object 131, for example, the group number of the corresponding chunk group is set as the object name and the respective pieces of chunk data included in the chunk group are set as the object values. The chunk group object 131 thus generated is transferred from the cloud transfer processing unit 130 to the cloud storage 240.

In FIG. 7 described above, the case where there is no redundant data has been described. For example, when a chunk including data having the same contents as any of the pieces of data D1 to D13 is present among chunks in files for which write request is made after the aforementioned operation, the data of this chunk is not newly stored in the chunk data table 114 and is not transferred to the cloud storage 240. For example, the actual data of this chunk is not written, and only the metadata for associating the chunk and the chunk data with each other is written to the chunk map table 112. In this way, the "deduplication processing" for suppressing storage of redundant data is executed.

As in the above example, in the deduplication processing, the storage amount of actual data is reduced but a large amount of management data has to be held. For example, the management data includes a fingerprint (hash value) corresponding to the actual data. Since the fingerprint is generated for each chunk to be stored, a large-capacity storage area has to be provided to hold such fingerprints. As a technique for efficiently retrieving redundant data, there is also a method using a Bloom filter. However, a large-capacity storage area has to be provided also to hold the data structure of the Bloom filter.

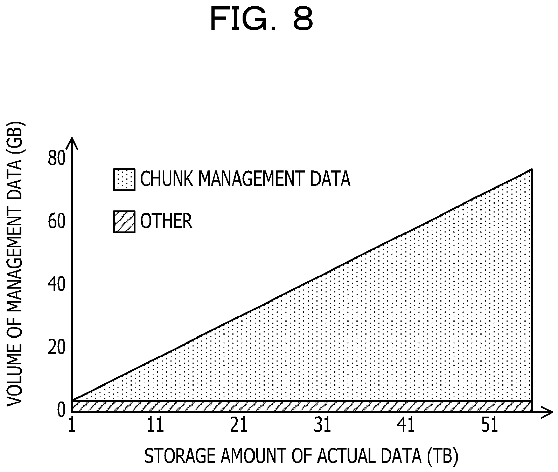

FIG. 8 is an example of a graph illustrating a relationship between the storage amount of actual data and the volume of management data. In FIG. 8, the held management data is illustrated while being divided into chunk management data and other data. The chunk management data includes the aforementioned chunk map table 112 and chunk meta table 113, and the chunk meta table 113 includes fingerprints (hash values).

As in the example of FIG. 8, the held management data is composed mostly of the chunk management data. For example, when data of 64 terabytes (TB) is divided into chunks of 16 kilobytes (KB), 4,000,000,000 chunks are generated. In this case, in order to hold a fingerprint of 160 bits for each chunk, a storage area of 80 gigabytes (GB) has to be provided.

There is relevance between the volume of the chunk management data and the sizes of the chunks. If it is possible to double the average size of the chunks with the deduplication ratio being the same, it is possible to halve the number of chunks and reduce the volume of the chunk management data accordingly. For example, if the size of the fingerprint is the same, the volume of the chunk management data may be halved.

Meanwhile, another technical point of interest in the deduplication processing is how to determine the division positions of the chunks. In this regard, division methods for chunks include fixed-length division and variable-length division. The fixed-length division is advantageous in that the processing is simple and the load is small. Meanwhile, the variable-length division is advantageous in that the deduplication ratio may be increased.

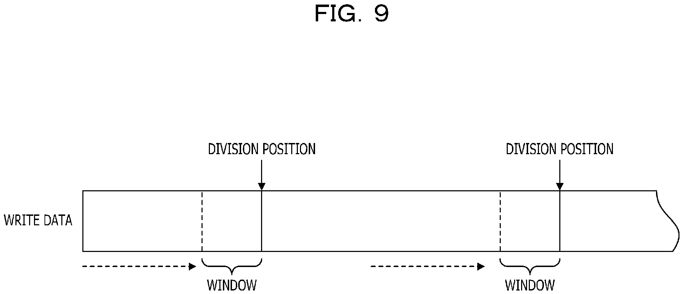

FIG. 9 is a diagram illustrating an example of a variable length chunk division method. In FIG. 9, variable length chunking using the Rabin-Karp rolling-hash (RH) method is illustrated as an example.

In the RH method, a window of a predetermined size is set to be shifted one byte by one byte from the head of data for which write request is made (write data), and a hash value of the data in the window is calculated. When the calculated hash value matches a specific pattern, the end of the window in this case is determined as the division position of the chunk.

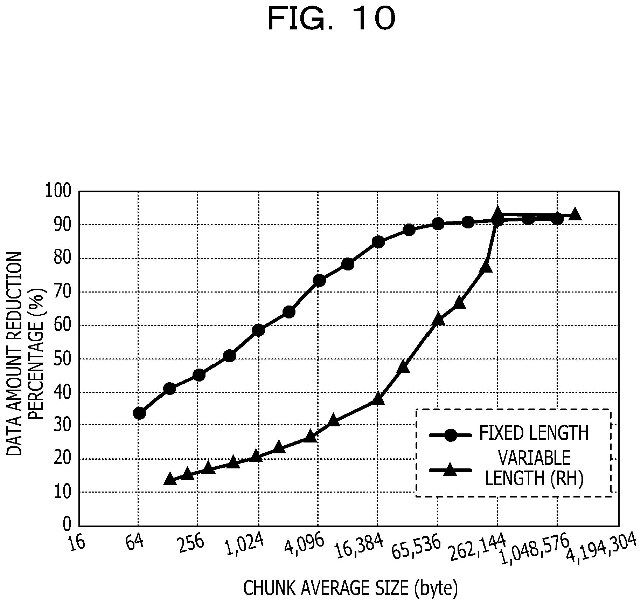

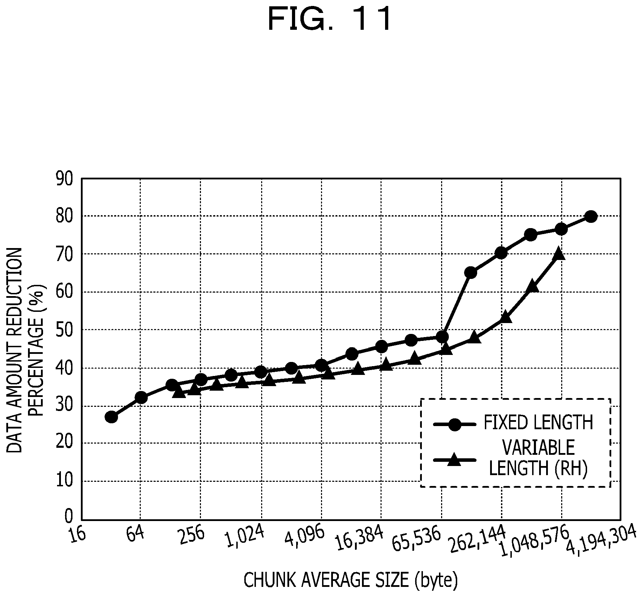

FIG. 10 is a first diagram illustrating an example of the relationship between the average size of chunks and the data amount reduction percentage. FIG. 11 is a second diagram also illustrating an example of the relationship between the average size of chunks and the data amount reduction percentage. The horizontal axes of FIGs. 10 and 11 indicate the average size of chunks subjected to the variable length division using the RH method. The vertical axes of FIGs. 10 and 11 indicate the percentage of the data amount after the deduplication to the original data amount.

FIG. 10 illustrates an example of storing document data generated by document creation software. Meanwhile, FIG. 11 illustrates an example of storing data of a virtual machine (VM) image. In both cases, the deduplication ratio for the variable length is higher than that for the fixed length. For example, when document data is updated, a case where a bit string in units of bytes is inserted at a specific position in bit string of the document data is often seen. In such a case, part of the bit string of the document data is shifted in units of bytes. The RH method has such a characteristic that, when such a position shift of bit string occurs, a section of the bit string in a range in which the shift has occurred is easily accurately detected, and the deduplication ratio tends to be higher as in the example of FIG. 10.

As described above, if it is possible to increase the average size of chunks without reducing the deduplication ratio, the volume of the chunk management data may be reduced. Meanwhile, as in the examples of FIGs. 10 and 11, the larger the average size of chunks is, the higher the data amount reduction percentage is. For example, in the example of FIG. 10, when the average size of chunks reaches about 64 KB, the data amount reduction percentage exceeds 60%, and the deduplication ratio becomes very poor. As described above, the smaller the average size of chunks is, the higher the deduplication ratio is, but the greater the volume of the chunk management data is. Meanwhile, the greater the average size of chunks is, the lower the deduplication ratio is.

As a method of increasing the deduplication ratio, there is a method of analyzing a context of write data according to the type of the write data and determining the division positions of chunks based on the analysis result. Although this method is effective when the type of write data is known, this method is not effective for write data of an unknown type.

In the chunking processing according to the embodiment described below, the deduplication ratio is made less likely to decrease even when the average size of chunks increases. For example, when the average chunk size is about 64 KB in storing of document data, the chunking processing of the embodiment achieves a deduplication ratio in the case where the average chunk size is about 16 KB in FIG. 10. In the chunking processing according to the embodiment, efficient deduplication is also made possible when position shift of bit string occurs as in the variable length chunking using the RH method described above. In the chunking processing according to the embodiment, these effects may be exhibited independently of the type of write data.

A method of detecting a location where a change is likely to occur in write data will be considered. In the variable length chunking using the aforementioned RH method, the division positions of the chunks are determined based on the contents of the bit string in the write data without interpreting the context of the write data. Therefore, the variable length chunking may be referred to as a method of performing deduplication independent of the type of data. However, the division positions are basically determined based only on the contents of the bit string included in the window. Accordingly, although it is easy to detect a portion where the position shift of the bit string is likely to have occurred, this method is unable to detect a range itself where the bit string is likely to have been changed (for example, the start point and the end point of the range).

In the embodiment, detection of the range itself where the bit string is likely to have been changed is made possible. For this purpose, the concept of polymer analysis is used. For example, when a degrading enzyme is applied to a sample, a polymer bond breaks at a location where the bonding energy of molecules is low in a molecular arrangement. This concept is used to analyze the bit string of the write data and search for a location where the bonding energy is low and the bit string is likely to be separated, and the range where the bit string is likely to have been changed is thereby detected.

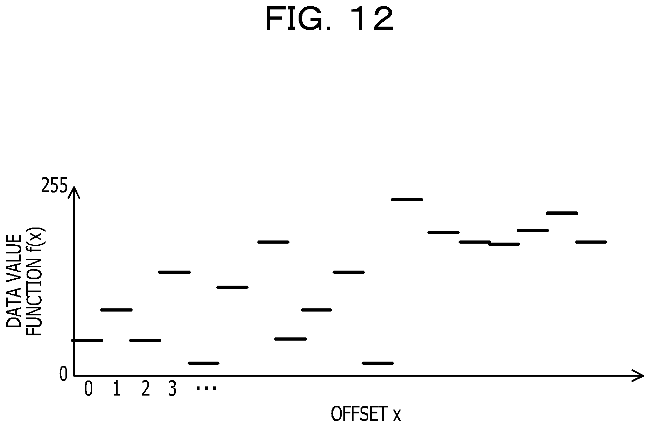

FIG. 12 is a diagram illustrating an example of distribution of data values in write data. The offset x illustrated in the horizontal axis of FIG. 12 indicates the number (address) of each unit bit string from the head of a bit string of the write data when the bit string of the write data is divided into unit bit strings of a fixed size from the head. In this embodiment, as an example, the size of the unit bit string is one byte. Hereinafter, the unit bit string is thus referred to as a "byte string".

The numerical value indicated by each byte string is referred to as a "data value" of the byte string. The data value function $f(x)$ illustrated in the vertical axis of FIG. 12 is a function indicating the data value of the byte string for the offset x of the byte string. If it is possible to generate an operator that associates a function indicating separability, for example, a function $Pot(x)$ indicating potential energy with such a data value function $f(x)$, a portion having low bonding energy may be detected from the bit string of write data.

Both ends of a change range (for example, a range in which the bit string is inserted) in the bit string of write data are assumed to be positions where the data pattern changes. Accordingly, the operator is preferably an operator that derives a change in a degree of distribution of data values. Therefore, in the embodiment, an entropy function $Ent(x)$ indicating the complexity of the data value function $f(x)$ is calculated, and the function $Pot(x)$ is calculated by differentiating the function $Ent(x)$ as in the following formula (1). The function $Pot(x)$ indicates a field of potential energy (energy field) for the data value function $f(x)$.

$$Pot(x) = -|dEnt(x)/dx| \quad ...(1)$$

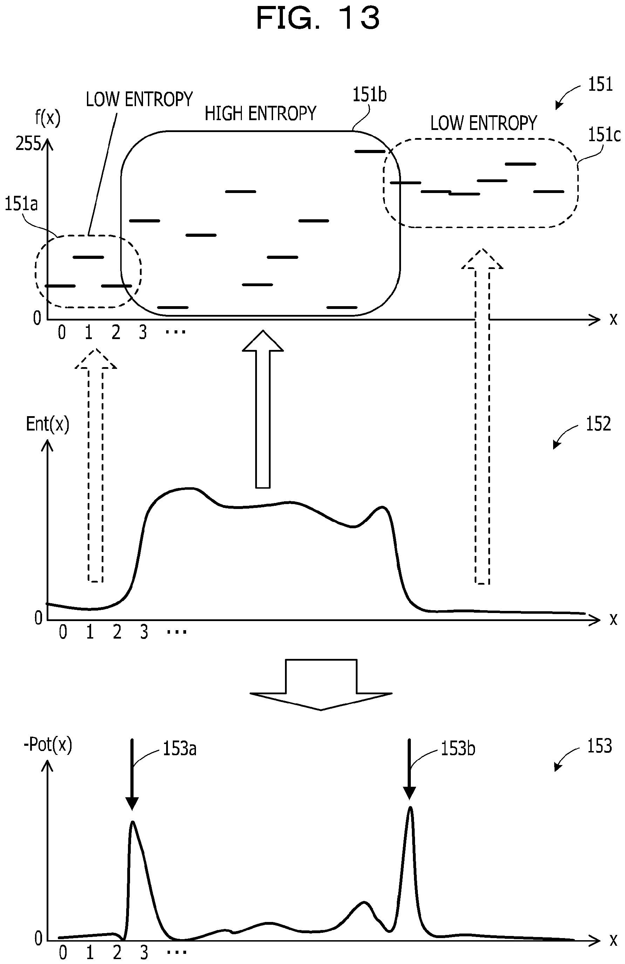

FIG. 13 is a diagram illustrating a calculation example of energy field. In FIG. 13, a graph 151 illustrates an example of the data value functions $f(x)$ for the byte strings. A graph 152 illustrates an entropy function $Ent(x)$ calculated based on the data value functions $f(x)$ of the graph 151. A graph 153 illustrates a function $-Pot(x)$ obtained by reversing positive and negative of the function $Pot(x)$ calculated by using the formula (1) based on the function $Ent(x)$ of the graph 152.

It is found from the graph 152 that the entropy of the data values in a region 151b of the graph 151 is significantly higher than those in regions 151a and 151c of the graph 151. In such a case, in the write data, the complexity of the data value greatly varies between the region 151a and the region 151b, and the complexity of the data value greatly varies also between the region 151b and the region 151c. The bit patterns in the respective regions 151a, 151b, and 151c in the write data are thus assumed to vary from one another. As a reason for such variation, for example, there is assumed a possibility that the bit string of the region 151b is inserted between the bit string of the region 151a and the bit string of the region 151c. For example, when the data values in the regions 151a and 151c are close to each other, there is also assumed a possibility that the bit string in the range of the region 151b have been changed.

Accordingly, in the embodiment, the chunking processing unit 121 basically calculates the function Pot(x) indicating the energy field of the data value for each of the offset positions of the byte strings. The chunking processing unit 121 then determines a position at which a variation amount of the entropy of the data values is large as the division position of chunks, based on the function Pot(x). For example, the chunking processing unit 121 determines the position of a section minimum value (local minimum value) of the function Pot(x) (local maximum value of -Pot(x)) as the division position. This increases the possibility that a range in which data is inserted or a range in which data is changed is set as the range of one chunk. In the example of FIG. 13, the positions of the arrows 153a and 153b illustrated in the graph 153 are determined as the division positions of chunks.

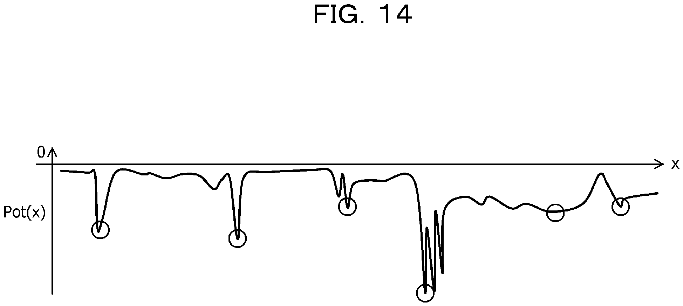

FIG. 14 is a graph illustrating an example of the energy field. The chunk division position determination method described in FIG. 13 increases the possibility that positions in front of and behind a range in which a bit string is inserted or a range in which a bit string is changed are determined as the division positions of chunks, only by analyzing the contents of bit string without interpreting the context of write data. Since the division positions are determined from the analysis result of the entire bit string, it is possible to increase the deduplication ratio compared to the above-described RH method that depends only on the bit string in the window.

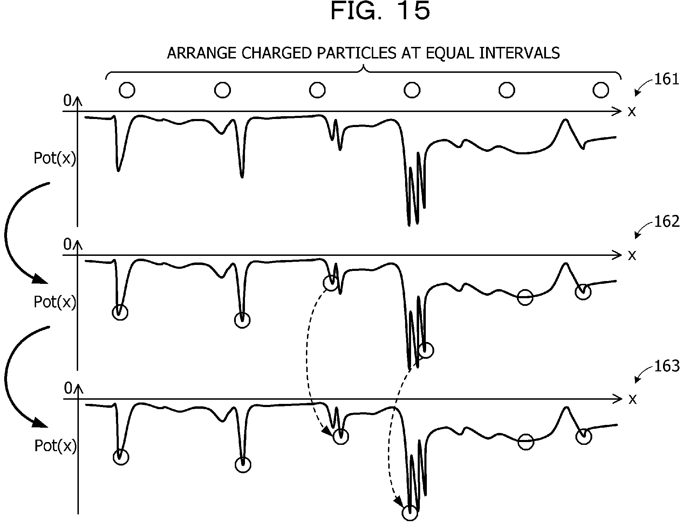

However, as described above, in order to reduce the volume of the chunk management data, it is desirable that the lengths of the chunks may be large to some extent and equivalent to one another. For example, as in positions indicated by circles in FIG. 14, it is desirable that positions of the offset of the byte strings arranged at intervals large to some extent and equivalent to one another are determined as the chunk division positions. However, such a condition may not be satisfied by simply selecting the section minimum value (local minimum value) of the energy field. A method illustrated in FIG. 15 may be thus adopted.

FIG. 15 is a diagram illustrating an example of chunk division position determination processing. The graphs 161 to 163 in FIG. 15 illustrate the same energy field as that in FIG. 14.

In order to set the division positions of chunks at as equal intervals as possible, the division positions of chunks are determined by using the following concept using charged particles exerting repulsive force on one another. First, as illustrated in the graph 161, the charged particles are arranged at equal intervals. In FIG. 15, the charged particles are indicated by circles. The intervals of the charged particles are set to a target value of the average size of chunks. When these charged particles are dropped into the energy field, the charged particles move to positions where the potential energy is low as illustrated in the graph 162. As illustrated in the graph 163, the charged particles are then caused to perform motion, such as a tunneling effect, so as not to fall into a local optimum solution. Determining the positions of the charged particles as illustrated in the graph 163 as the division positions of chunks allows the division positions of chunks to be determined such that the sizes of the chunks are close to the target size.

A specific example of the chunking processing will be further described.

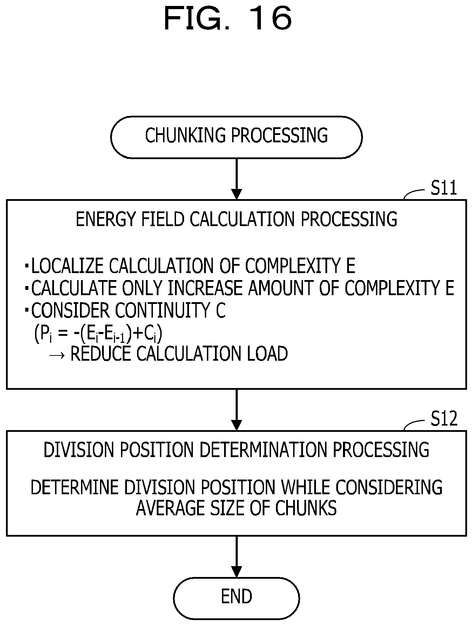

FIG. 16 is a flowchart illustrating an example of the chunking processing. As illustrated in FIG. 16, the chunking processing by the chunking processing unit 121 is roughly divided into energy field calculation processing (step S11) and chunk division position determination processing (step S12).

Processing of calculating the entropy (complexity) of the data value and the value of the energy field for each of the offset positions of the byte strings has a problem that the processing load is high. Accordingly, the chunking processing unit 121 limits the byte strings used for the calculation of the complexity E to the byte strings near the offset position to be processed to localize the calculation and reduce the calculation processing load. For example, the chunking processing unit 121 calculates the complexity E by using only the byte strings near the offset position to be processed by using a weighting coefficient depending on a pseudo normal distribution. This method may reduce the load of calculating the complexity E while suppressing a decrease in the accuracy of calculating the complexity E. As a result, the calculation load of the energy field may be reduced.

When the division positions are determined based on the variation state of the complexity E, the chunking processing unit 121 does not have to select both of the position at which the complexity E rapidly increases and the position at which the complexity E rapidly decreases as the division positions, and may select only one of the positions as the division position as long as the division positions are determined at sufficient intervals. Accordingly, the chunking processing unit 121 obtains the value of the energy field by calculating only the increase amount of the complexity E without calculating the differential of the complexity E. This reduces the calculation load of the energy field. Although the increase amount of the complexity is calculated in the embodiment, the decrease amount of the complexity may be calculated instead.

If the calculation of the complexity E is localized by using the weighting factor as described above, when one long data pattern appears (for example, when one data pattern having certain regularity appears), there is a possibility that the appearance of this data pattern is recognized. Accordingly, the chunking processing unit 121 calculates the values in the energy field while considering continuity C of the data values. The continuity C is an index indicating the continuity of a data pattern (whether a specific data pattern continues). For example, there is used a calculation method in which, even if the increase amount of the complexity E is large, when the continuity C of the data values is determined to be high, a position is assumed to be in the middle of the data pattern and is not determined as the division position. The chunking processing unit 121 thus calculates the value Pi of the energy field (energy value) at the offset number i by using $-(E_i - E_{i-1}) + C_i$.

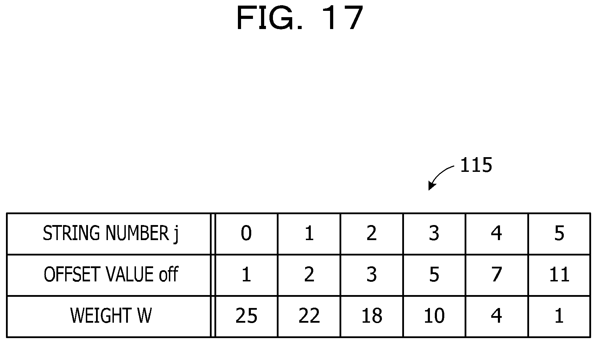

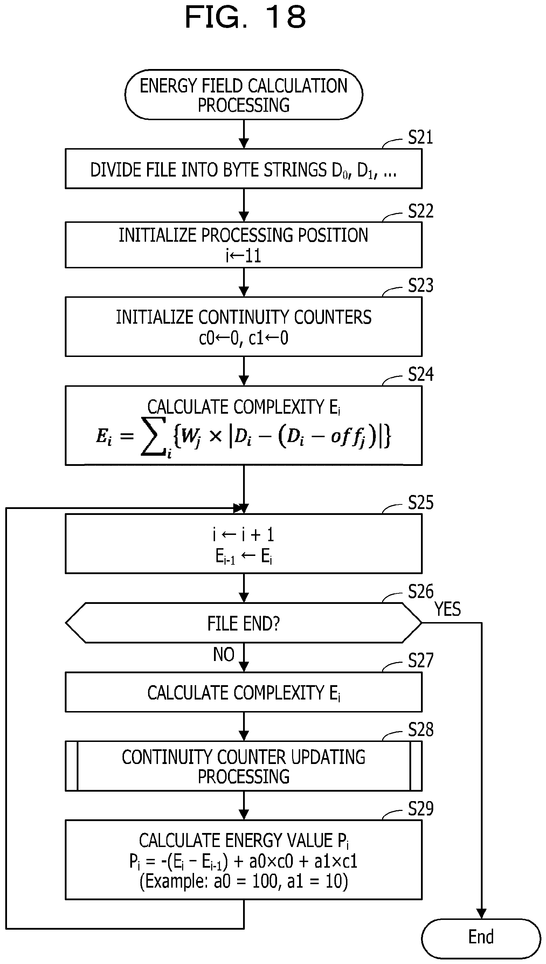

An example of the energy field calculation processing in step S11 will be described below by using FIGs. 17 and 18.

FIG. 17 is a diagram illustrating a configuration example of a weight table. In the weight table 115 illustrated in FIG. 17, a string number j indicates a number for a string in the weight table 115, and an offset value off and a weight W are registered in advance in association with each string.

The offset value off indicates a forward offset number with respect to the offset position (processing position) to be processed. When the offset number of the byte string at the processing position is i, off= 1 indicates the byte string with the offset number (i-1), and off=2 indicates the byte string with the offset number (i-2). In the embodiment, as an example, it is assumed that the complexity Ei is calculated by using the byte strings with the offset numbers (i-1), (i-2), (i-3), (i-5), (i-7), and (i-11), in addition to the offset number i corresponding to the processing position, as the byte strings near the processing position. The weight W is a weighting coefficient depending on a random variable of a pseudo normal distribution centered at the offset number i.

FIG. 18 is a flowchart illustrating an example of energy field calculation processing. The processing of FIG. 18 corresponds to the processing of step S11 in FIG. 16. The processing of FIG. 18 is executed with reference to the weight table 115 of FIG. 17.

[Step S21] The chunking processing unit 121 divides a file for which write request is made into unit bit strings (byte strings) $D_0$, $D_1$, ... each having a size of one byte.

[Step S22] The chunking processing unit 121 initializes the offset number i indicating the processing position. When the weight table 115 of FIG. 17 is used, the byte strings with the offset numbers "0" to "11" are used for the calculation in the initial state, and "11" is thus set as the initial value of the offset number i.

[Step S23] The chunking processing unit 121 initializes values of continuity counters that are indices of continuities. In the embodiment, as an example, count values c0 and c1 are assumed to be used as the values of the continuity counters, and the chunking processing unit 121 sets both of the count values c0 and c1 to "0". The count values c0 and c1 are values for determining the continuities of data patterns having regularities different from each other. As will be described later, the count value c0 indicates the level of a possibility that a byte string with a data value of "0" continues, and the count value c1 indicates the level of a possibility that a byte string with a data value of "127" or less continues.

[Step S24] The chunking processing unit 121 calculates the complexity Ei for the offset number i by using the following formula (2).

$$E_i = \sum_i \left\{ W_j \times \left| D_i - \left( D_i - off_j \right) \right| \right\} \quad \cdots (2)$$

In the formula (2), $off_j$ and $W_j$ respectively indicate the offset value off and the weight W associated with the string number j in the weight table 115 of FIG. 17. Accordingly, the complexity Ei is calculated by adding up all values obtained by multiplying absolute values of differences by the corresponding weights W, the differences each being a difference between the data value of the offset number i and a corresponding one of the data values of the offset numbers (i-1), (i-2), (i-3), (i-5), (i-7), and (i-11).

The formula (2) is an example of a calculation formula for the complexity Ei, and the complexity Ei may be calculated by using another formula.

[Step S25] The chunking processing unit 121 increments the offset number i of the processing position by "1" and moves the byte string to be processed to the next byte string. The chunking processing unit 121 also sets the most recently calculated complexity Ei as the complexity $E_{i-1}$ corresponding to the offset number (i-1).

[Step S26] The chunking processing unit 121 determines whether the byte string $D_i$ at the processing position is the end of the file. When the byte string $D_i$ at the processing position is the end of the file, the chunking processing unit 121 sets the end of the byte string $D_i$ at the processing position as the division position of the chunk, and terminates the chunking processing. Meanwhile, when the byte string $D_i$ at the processing position is not the end of the file, the chunking processing unit 121 executes the processing of step S27.

[Step S27] The chunking processing unit 121 calculates the complexity Ei at the current offset number i by using the formula (2) described above.

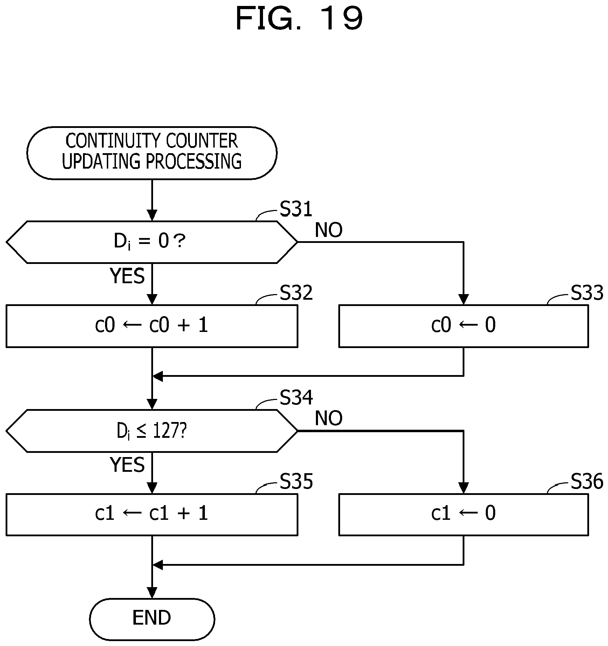

[Step S28] The chunking processing unit 121 executes processing of updating the count values c0 and c1 of the continuity counters. This processing will be described in detail later by using FIG. 19.

[Step S29] The chunking processing unit 121 calculates the value (energy value) Pi of the energy field at the offset number i by using the following formula (3).

$$P_i = -(E_i - E_{i-1}) + a0 \times c0 + a1 \times c1 \ ...(3)$$

In the formula (3), a0 and a1 are weighting coefficients corresponding to the count values c0 and c1, respectively. For example, a0=100 and a1=10 are set. In this case, this setting indicates that the data pattern in which a byte string with a data value of "0" continues is detected while being given greater importance as a data pattern included in one chunk, than the data pattern in which a byte string with a data value of "127" or less continues.

When the processing of step S29 is completed, the processing proceeds to step S25 and the byte string to be processed is moved to the next byte string.

FIG. 19 is a flowchart illustrating an example of the continuity counter updating processing. The processing of FIG. 19 corresponds to the processing of step S28 in FIG. 18.

First, in steps S31 to S33, processing of updating the count value c0 is executed.

[Step S31] The chunking processing unit 121 determines whether the data value of the byte string $D_i$ at the processing position is "0". The chunking processing unit 121 executes the processing of step S32 when the data value is "0", and executes the processing of step S33 when the data value is not "0".

[Step S32] The chunking processing unit 121 increments the count value c0 by "1".

[Step S33] The chunking processing unit 121 initializes the count value c0 to "0".

The processing of steps S31 to S33 described above causes the count value c0 to indicate the level of the possibility that the byte string with the data value of "0" continues. Then, in steps S34 to S36, processing of updating the count value c1 is executed.

[Step S34] The chunking processing unit 121 determines whether the data value of the byte string $D_i$ at the processing position is "127" or less. The chunking processing unit 121 executes the processing of step S35 when the data value is equal to or less than "127", and executes the processing of step S36 when the data value is greater than "127".

[Step S35] The chunking processing unit 121 increments the count value c1 by "1".

[Step S36] The chunking processing unit 121 initializes the count value c1 to "0".

The processing of steps S34 to S36 described above causes the count value c1 to indicate the level of the possibility that the byte string with a data value of "127" or less continues.

The count values c0 and c1 are each an example of an index indicating the possibility that the bit string has certain regularity, and such indices are not limited to these examples, and other indices may be used.

The processing of FIGs. 18 and 19 described above may reduce the load of calculating the complexity (entropy) while suppressing a decrease in the accuracy of calculating the complexity. Such an effect may be obtained by analyzing the bit string without interpreting the context of the write data.

Next, the division position determination processing illustrated in step S12 of FIG. 16 will be described.

In the division position determination processing, processing considering the target value of the average size of chunks is performed such that the intervals between the division positions of chunks are equal to or larger than a certain size and are equal to one another as much as possible as described in FIG. 15. When the division position is determined based on the section minimum value (local extreme value) of the energy field, processing in which a tunneling effect occurs is performed to avoid the case where the calculation result of the section minimum value takes the local optimum solution. One method for achieving such a condition includes, for example, a method in which, when the section minimum value is detected and then a position having a smaller value is detected in a section subsequent to the position of the section minimum value, the section minimum value is updated to a value at the subsequent position if the difference of the values is sufficiently large with respect to the difference of the positions.

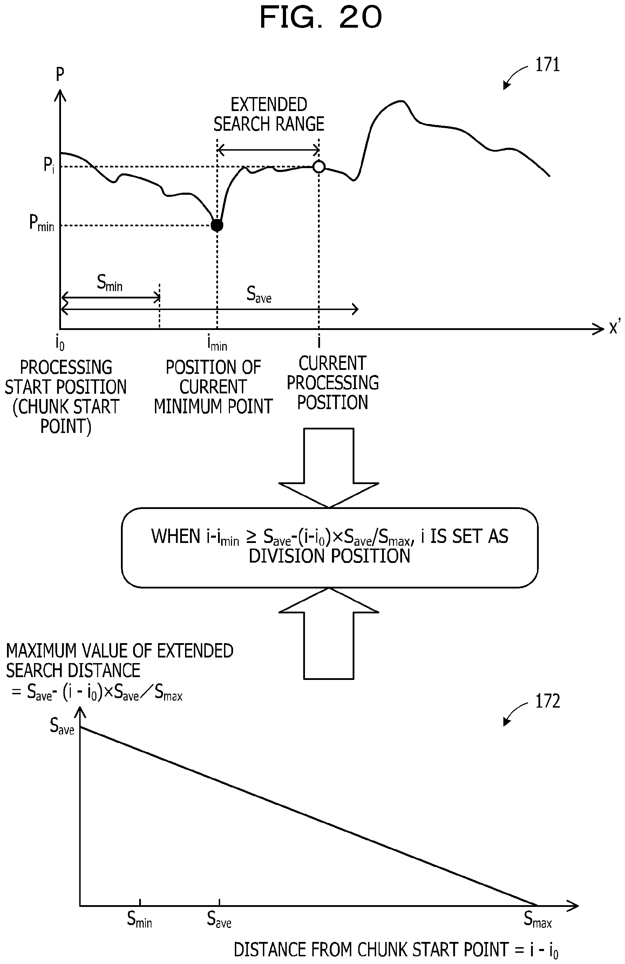

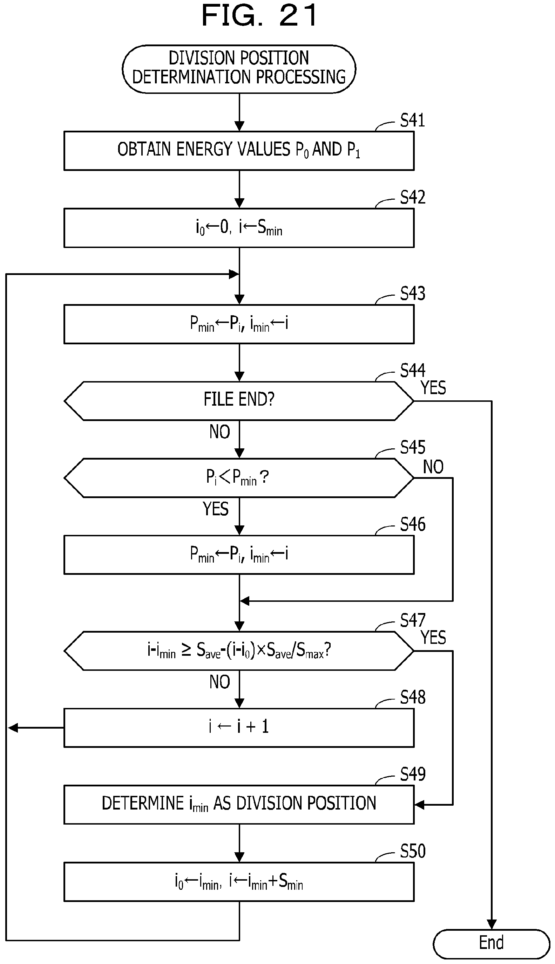

In this embodiment, another method employing the aforementioned method is used. The other method will be described below by using FIGs. 20 and 21.

FIG. 20 is a diagram for explaining minimum point search in the energy field. In FIG. 20, the value (energy value) P of the energy field is scanned from a chunk start point side to search for the minimum value (local minimum value). The chunk start point is the start position of a chunk for which determination of the end position (division point) is currently performed, and indicates the head position of the write data (file) or the chunk division position immediately in front of the chunk.

When the minimum value is found by the search, there is set an extended search distance indicating how much the search range for the minimum value is to be extended with the position of the minimum value being the start point. If no new minimum value is found in the range (extended search range) from the position where the minimum value is found to the position advanced therefrom by the extended search distance, the position of the original minimum value is determined as the division position of chunks.

The extended search distance is set depending on the target value of the average chunk size and the distance from the chunk start point to the position where the minimum value is found. The longer the distance from the chunk start point is, the shorter the extended search range is set and, when the distance from the chunk start point reaches a prescribed maximum chunk size, the search is not extended. Accordingly, the search range for the minimum value is limited to a range equal to or less than the maximum chunk size.

The maximum value of the extended search distance is set to the target value of the average chunk size. The search range of the minimum value is thus ensured to have a length equal to or larger than the target average chunk size. When the distance from the chunk start point is short and a small chunk whose size is smaller than the target average chunk size is likely to be generated, the search range is extended by a length close to the target average chunk size. The division positions of chunks are thereby determined such that the average of the sizes of the generated chunks is close to the target value.

In FIG. 20, $i_0$ indicates the offset number of the chunk start point, $i_{min}$ indicates the offset number of the current minimum point (position where the minimum value is detected), and i indicates the offset number of the current processing position. $S_{min}$ is the minimum chunk size and is set to, for example, 16 KB. $S_{max}$ is the maximum chunk size and is set to, for example, 256 KB. $S_{ave}$ is the target value of the average chunk size and is set to, for example, 64 KB.

The graph 171 in FIG. 20 illustrates relationships among io, $i_{min}$, i, $S_{min}$, and $S_{ave}$. The length of the extended search range (extended search distance) is $(i-i_{min})$. x' of the horizontal axis of the graph 171 indicates the offset number of the byte string from the chunk start point.

The determination of whether to set the latest minimum point as the chunk division position is performed by using, for example, the condition described in the following formula (4).

$$i-i_{min} \geq S_{ave}-(i-i_0) \times S_{ave}/S_{max} \ ...(4)$$

The graph 172 in FIG. 20 illustrates a relationship between the distance from the chunk start point and the maximum value of the extended search distance indicated in the right-hand side of the formula (4). For example, when the extended search distance from the latest minimum point reaches the value indicated by the right-hand side of the formula (4), the latest minimum point is determined as the division point of the chunk.

FIG. 21 is a flowchart illustrating an example of the division position determination processing. The processing of FIG. 21 corresponds to the processing of step S12 in FIG. 16.

[Step S41] The chunking processing unit 121 acquires the energy values $P_0$, $P_1$, ... of the respective byte strings calculated in step S11 of FIG. 16.

[Step S42] The chunking processing unit 121 initializes the offset number $i_0$ indicating the start position (chunk start point) of processing to "0". The chunking processing unit 121 also initializes the offset number i indicating the current processing position by setting the offset number i to the minimum chunk size $S_{min}$. The search for the minimum value is thereby started from the position advanced from the chunk starting point by the minimum chunk size.

[Step S43] The chunking processing unit 121 sets the minimum value $P_{min}$ of the energy value to the energy value $P_i$ at the processing position i. The chunking processing unit 121 also sets the offset number $i_{min}$ indicating the position (minimum point) where the minimum value $P_{min}$ is detected to i.

[Step S44] The chunking processing unit 121 determines whether the processing position i indicates the byte string at the file end. The chunking processing unit 121 executes the processing of step S45 when the processing position i does not indicate the byte string at the file end, and terminates the processing when the processing position i indicates the byte string at the file end. In the latter case, the division positions determined in step S49 and the end position of the file are ultimately determined as the division positions of chunks.

[Step S45] The chunking processing unit 121 determines whether the energy value Pi at the processing position is smaller than the current minimum value $P_{min}$. The chunking processing unit 121 executes the processing of step S46 when the energy value Pi is smaller than the current minimum value $P_{min}$, and executes the processing of step S47 when the energy value Pi is equal to or larger than the current minimum value $P_{min}$.

[Step S46] The chunking processing unit 121 updates the minimum value $P_{min}$ to the energy value Pi at the processing position. The chunking processing unit 121 also updates the offset number $i_{min}$ indicating the minimum point to the offset number i indicating the current processing position.

[Step S47] The chunking processing unit 121 determines whether the extended search distance $(i-i_{min})$ satisfies

the condition of the aforementioned formula (4). The chunking processing unit 121 executes the processing of step S49 when the extended search distance satisfies the condition, and executes the processing of step S48 when the extended search distance does not satisfy the condition.

[Step S48] The chunking processing unit 121 increments the offset number i of the processing position by "1" and advances the processing position to the position of the next offset number. In this case, the search for the minimum value continues.

[Step S49] The chunking processing unit 121 determines the rear end of the byte string indicated by the offset number $i_{min}$ as the division position of chunks.

[Step S50] The chunking processing unit 121 updates the offset number $i_0$ indicating the start position (chunk start point) of processing to the offset number $i_{min}$. The chunking processing unit 121 also updates the offset number i indicating the current processing position to $(i_{min}+S_{min})$. Thereafter, the processing proceeds to step S43. The search for the minimum value is thereby started again from the position advanced from the division position of chunks determined in step S49 by the minimum chunk size.

Next, processing of the cloud storage gateway 100 performed when writing of a file is requested will be described by using flowcharts.

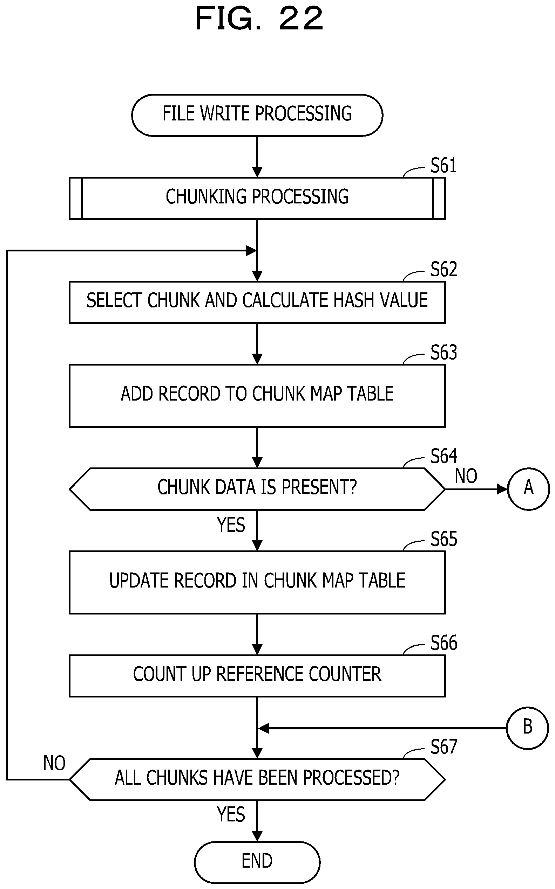

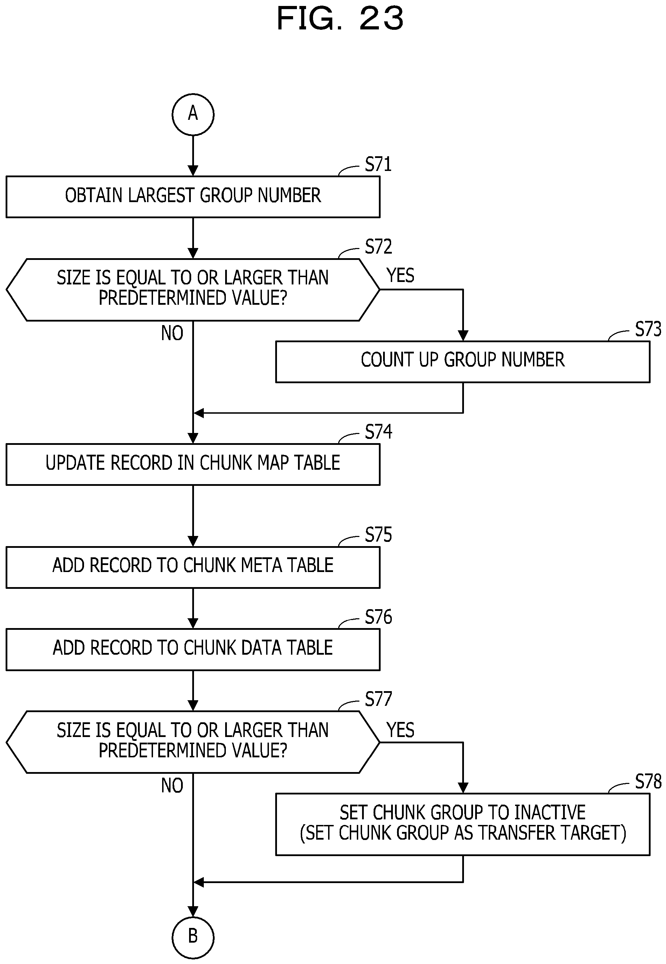

FIGs. 22 and 23 are flowcharts illustrating an example of file writing processing. When receiving a write request for a file from the NAS client 210, the NAS service processing unit 120 executes the processing of FIG. 16. This write request is a request to write a new file or a request to update an existing file.

[Step S61] When the received write request is a request to write a new file, the chunking processing unit 121 of the NAS service processing unit 120 adds a record indicating directory information of a file for which write request is made to the directory table 111. In this case, an inode number is assigned to the file. When the received write request is a request to update an existing file, the corresponding record is already registered in the directory table 111.

The chunking processing unit 121 also executes the chunking processing on the file for which write request is made in the procedure illustrated in FIG. 16. For example, the chunking processing unit 121 divides the actual data of the file for which write request is made into variable-length chunks.

[Step S62] The deduplication processing unit122 of the NAS service processing unit 120 selects the chunks one by one from the head of the file as the chunk to be processed. The deduplication processing unit 122 calculates the hash value based on the chunk data of the selected chunk (hereinafter, referred to as "selected chunk data" for short).

[Step S63] The deduplication processing unit 122 adds a record to the chunk map table 112 and registers the following information in this record. The inode number of the file for which write request is made is registered in "ino", and information on the chunk to be processed is registered in "offset" and "size".

[Step S64] The deduplication processing unit 122 refers to the chunk meta table 113 and determines whether there is a record in which the hash value calculated in step S62 is registered in the item "hash". Whether the selected chunk data already exists (is redundant) is thereby determined. The deduplication processing unit 122 executes the processing of step S65 when the corresponding record is found, and executes the processing of step S71 in FIG. 23 when there is no corresponding record.

[Step S65] The deduplication processing unit 122 updates the record added to the chunk map table 112 in step S63 based on information on the record retrieved from the chunk meta table 113 in step S64. For example, the deduplication processing unit 122 reads the setting values of "gno" and "gindex" from the corresponding record of the chunk meta table 113. The deduplication processing unit 122 registers the read setting values of "gno" and "gindex" in "gno" and "gindex" of the record added to the chunk map table 112, respectively.

[Step S66] The deduplication processing unit 122 counts up the value of the reference counter registered in "refcnt" of the record retrieved from the chunk meta table 113 in step S64.

[Step S67] The deduplication processing unit 122 determines whether all chunks obtained by the division in step S61 have been processed. When there is an unprocessed chunk, the deduplication processing unit 122 causes the processing to proceed to step S62 and continues performing the processing by selecting one unprocessed chunk from the head side. Meanwhile, when all chunks have been processed, the deduplication processing unit 122 terminates the processing.

The description continues below by using FIG. 23.

[Step S71] The deduplication processing unit 122 refers to the chunk data table 114 and obtains the group number registered in the last record (for example, the largest group number at this moment).

[Step S72] The deduplication processing unit 122 determines whether the total size of pieces of chunk data included in the chunk group with the group number acquired in step S71 is equal to or larger than a predetermined value. The deduplication processing unit 122 executes the processing of step S73 when the total size is equal to or larger than the predetermined value, and executes the processing of step S74 when the total size is smaller than the predetermined value.

[Step S73] The deduplication processing unit 122 counts up the group number acquired in step S71 to generate a new group number.

[Step S74] The deduplication processing unit 122 updates the record added to the chunk map table 112 in step S63 as follows. When the determination result is Yes in step S72, the group number generated in step S73 is registered in "gno", and the index number indicating the first chunk is registered in "gindex". Meanwhile, when the determination result is No in step S72, the group number acquired in step S71 is registered in "gno". In the item of "gindex", an index number indicating a position following the last chunk data included in the chunk group corresponding to this group number is registered.

[Step S75] The deduplication processing unit 122 adds a new record to the chunk meta table 113 and registers the following information in the new record. Information similar to that in step S74 is registered in "gno" and "gindex". Information on the chunk to be processed is registered in "offset" and "size". The hash value calculated in step S62 is registered in "hash". An initial value "1" is registered in "refcnt".

[Step S76] The deduplication processing unit 122 adds a new record to the chunk data table 114 and registers the following information in the new record. Information similar to that in step S74 is registered in "gno" and "gindex". The chunk data is registered in "data".

[Step S77] The deduplication processing unit 122 determines whether the total size of pieces of chunk data included in the chunk group with the group number recorded in each of the records in steps S74 to S76 is equal to or larger than a predetermined value. The deduplication processing unit 122 executes the processing of step S78 when the total size is equal to or larger than the predetermined value, and executes the processing of step S67 in FIG. 22 when the total size is smaller than the predetermined value.

[Step S78] The deduplication processing unit 122 sets the chunk group with the group number recorded in each of the records in steps S74 to S76 to inactive, and sets this chunk group as a transfer target of the cloud transfer processing unit 130. For example, registering the group number indicating the chunk group in a transfer queue (not illustrated) sets this chunk group as a transfer target. Thereafter, the processing proceeds to step S67 in FIG. 22.

Although not illustrated, in the case of the request to update an existing file, the reference counter corresponding to the chunk of the updated old file is counted down, following the processing of FIGs. 22 and 23.

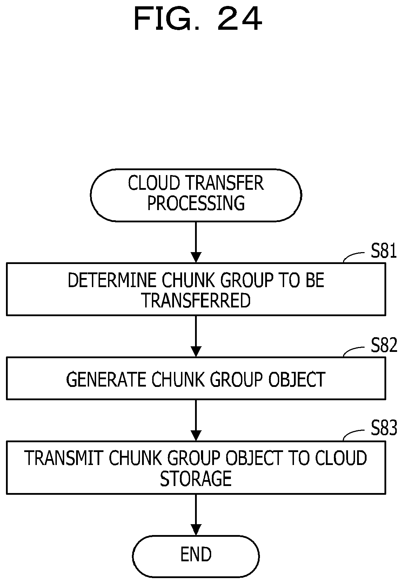

FIG. 24 is a flowchart of an example of cloud transfer processing. The processing of FIG. 24 performed by the cloud transfer processing unit 130 is executed asynchronously with the processing of the NAS service processing unit 120 illustrated in FIGs. 23 and 24.

[Step S81] The cloud transfer processing unit 130 determines a chunk group set as the transfer target by the processing of step S78 in FIG. 23, among the chunk groups registered in the chunk data table 114. For example, when the group numbers indicating the chunk groups to be transferred are registered in a transfer queue, the cloud transfer processing unit 130 extracts one group number from the transfer queue.

[Step S82] The cloud transfer processing unit 130 generates the chunk group object 131.

[Step S83] The cloud transfer processing unit 130 transmits the generated chunk group object 131 to the cloud storage 240, and requests storage of the chunk group object 131.

In the processing of FIGs. 22 to 24 described above, the file for which write request is made is divided into variable-length chunks, and the data of the chunks is stored in the chunk data table 114 and the cloud storage 240 while being subjected to deduplication. As described above, in step S61 of FIG. 22, the chunks are divided from one another at the positions of the head and the end of the ranges in which addition or change is likely to have occurred. Moreover, the target value of the average size of chunks is set and the chunks large to some extent tend to be generated. Therefore, it is possible to reduce the volume of chunk management data such as the chunk meta table 113 while increasing the deduplication ratio in the deduplication processing.

The processing functions of the apparatuses (for example, the information processing apparatus 10 and the cloud storage gateway 100) illustrated in the above embodiments may be implemented by a computer. In such a case, there is provided a program describing processing contents of functions to be included in each apparatus, and the computer executes the program to implement the aforementioned processing functions in the computer. The program describing the processing contents may be recorded on a computer-readable recording medium. The computer-readable recording medium includes a magnetic storage device, an optical disc, a magneto-optical recording medium, a semiconductor memory, and the like. The magnetic storage device includes a hard disk drive (HDD), a magnetic tape, and the like. The optical disc includes a compact disc (CD), a digital versatile disc (DVD), a Blu-ray disc (BD, registered trademark), and the like. The magneto-optical recording medium includes a magneto-optical (MO) disk and the like.

In order to distribute the program, for example, portable recording media, such as DVDs and CDs, on which the program is recorded are sold. The program may also be stored in a storage device of a server computer and be transferred from the server computer to other computers via a network.

The computer that executes the program, for example, stores the program recorded on the portable recording medium or the program transferred from the server computer in its own storage device. The computer then reads the program from its own storage device and performs processing according to the program. The computer may also directly read the program from the portable recording medium and perform processing according to the program. The computer may also sequentially perform processes according to the received program each time the program is transferred from the server computer coupled to the computer via the network.

With regard to the embodiments described above, the following appendices are further disclosed.

**Claims**

1.   An information processing apparatus comprising:

a division processing unit that, each time when the division processing unit receives a write request of write data, divides the write data into a plurality of unit bit strings having a fixed size, calculates a complexity of a data value indicated by each of the plurality of unit bit strings, determines a division position in the write data based on a variation amount of the complexity, and divides the write data into a plurality of chunks by dividing the write data at the division position; and

a deduplication unit that stores data of the plurality of chunks in a storage device while performing deduplication.

2.   The information processing apparatus according to claim 1, wherein the division processing unit determines the division position based on a position where the variation amount takes a local extreme value.

3.   The information processing apparatus according to claim 1, wherein the division processing unit determines the division position based on a target value of an average chunk size and a position where the variation amount takes a local extreme value.

4.   The information processing apparatus according to claim 1, wherein

when detecting a first position where the variation amount takes a local extreme value, the division processing unit sets a search range for a local extreme value based on a maximum chunk size and a target value of an average chunk size, and

when not detecting a next local extreme value of the variation amount within the search range starting from the first position, the division processing unit determines the first position to be the division position.

5.   The information processing apparatus according to claim 4, wherein, when detecting the first position, the division processing unit sets the search range such that the larger a distance from the latest-determined division position to the first position is, the smaller a length of the search range is, and such that the length of the search range is equal to or smaller than the average chunk size.

6.   The information processing apparatus according to any one of claims 1 to 5, wherein the division processing unit determines the division position based on a value obtained by correcting an increase amount or a decrease amount of the complexity with an index indicating continuity of the data value.

7.   An information processing program that causes a computer to execute processing comprising:

each time when a write request of write data is received, dividing the write data into a plurality of unit bit strings having a fixed size, calculating a complexity of a data value indicated by each of the plurality of unit bit strings, determining a division position in the write data based on a variation amount of the complexity, and dividing the write data into a plurality of chunks by dividing the write data at the division position; and

storing data of the plurality of chunks in a storage device while performing deduplication.

8.   The information processing program according to claim 7, wherein, in the determining the division position, the division position is determined based on a position where the variation amount takes a local extreme value.

9.   The information processing program according to claim 7, wherein, in the determining the division position, the division position is determined based on a target value of an average chunk size and a position where the variation amount takes a local extreme value.

10.  The information processing program according to claim 7, wherein, in the determining the division position,

when a first position where the variation amount takes a local extreme value is detected, a search range for a local extreme value is set based on a maximum chunk size and a target value of an average chunk size, and

when a next local extreme value of the variation amount is not detected within the search range starting from the first position, the first position is determined to be the division position.

11. The information processing program according to claim 10, wherein, in the determining the division position, when the first position is detected, the search range is set such that the larger a distance from the latest-determined division position to the first position is, the smaller a length of the search range is, and such that the length of the search range is equal to or smaller than the average chunk size.

12. The information processing program according to any one of claims 7 to 11, wherein, in the determining the division position, the division position is determined based on a value obtained by correcting an increase amount or a decrease amount of the complexity with an index indicating continuity of the data value.

FIG. 1

WRITE DATA

| WD1 | WD2 | WD3 | ··· |
|-----|-----|-----|-----|

INFORMATION PROCESSING APPARATUS 10

DIVISION PROCESSING UNIT 11

DEDUPLICATION UNIT 12

STORAGE DEVICE 20

UNIT BIT STRING

| DT1 | DT2 | DT3 | DT4 | DT5 | DT6 | DT7 | DT8 | DT9 | DT10 |
|-----|-----|-----|-----|-----|-----|-----|-----|-----|------|

COMPLEXITY OF DATA VALUE

DT1 DT2 DT3 DT4 DT5 DT6 DT7 DT8 DT9 DT10

1

CHUNK

2a  2b

| CK1 | CK2 | CK3 |
|-----|-----|-----|

# FIG. 2

# FIG. 3

100

CLOUD STORAGE GATEWAY

101

PROCESSOR

102

RAM

103

HDD

104

GRAPHIC I/F

105

INPUT I/F

106

READING DEVICE

107

COMMUNICATION I/F

104a

DISPLAY DEVICE

105a

INPUT DEVICE

106a

PORTABLE RECORDING MEDIUM

107a

NETWORK

# FIG. 4

# FIG. 5

112

| ino | offset | size | gno | gindex |
|-----|--------|------|-----|--------|
| i1 | o11 | s11 | g1 | x1 |
| i1 | o12 | s12 | g1 | x2 |
| i2 | o21 | s21 | g1 | x3 |
| i2 | o22 | s22 | g1 | x4 |
| i2 | o23 | s23 | g2 | x1 |
| i2 | o24 | s24 | g2 | x2 |
| ... | ... | ... | ... | ... |

# FIG. 6

|  | | 113 |  |  |  |
|---|---|---|---|---|---|
| gno | gindex | offset | size | hash | refcnt |
| g1 | x1 | of1 | s1 | h1 | 1 |
| g1 | x2 | of2 | s2 | h2 | 2 |
| g1 | x3 | of3 | s3 | h3 | 3 |
| g1 | x4 | of4 | s4 | h4 | 1 |
| ... | ... | ... | ... | ... | ... |

|  | | 114 |
|---|---|---|
| gno | gindex | data |
| g1 | x1 | d1 |
| g1 | x2 | d2 |
| g1 | x3 | d3 |
| g1 | x4 | d4 |
| ... | ... | ... |

# FIG. 7

FILE

| D1 | D2 | D3 | D4 | D5 | D6 | D7 | D8 | D9 | D10 | D11 | D12 | D13 |

~114a

| gno | gindex | data |
|-----|--------|------|
| 1 | 1 | D1 |
| 1 | 2 | D2 |
| 1 | 3 | D3 |
| 1 | 4 | D4 |
| 1 | 5 | D5 |

gno=1 (INACTIVE)

~114b

| gno | gindex | data |
|-----|--------|------|
| 2 | 1 | D6 |
| 2 | 2 | D7 |
| 2 | 3 | D8 |
| 2 | 4 | D9 |
| 2 | 5 | D10 |
| 2 | 6 | D11 |

gno=2 (INACTIVE)

~114c

| gno | gindex | data |
|-----|--------|------|
| 3 | 1 | D12 |
| 3 | 2 | D13 |

gno=3 (ACTIVE)

# FIG. 8

# FIG. 9

# FIG. 10

# FIG. 11

# FIG. 12

# FIG. 13

## FIG. 14

# FIG. 15

ARRANGE CHARGED PARTICLES AT EQUAL INTERVALS

# FIG. 16

```
        ╭─────────────────────────╮
        │   CHUNKING PROCESSING   │
        ╰─────────────────────────╯
                     │
                     ▼                          S11
┌────────────────────────────────────────────────────┐
│        ENERGY FIELD CALCULATION PROCESSING         │
│                                                    │
│  ·LOCALIZE CALCULATION OF COMPLEXITY E             │
│  ·CALCULATE ONLY INCREASE AMOUNT OF COMPLEXITY E   │
│  ·CONSIDER CONTINUITY C                            │
│    (Pᵢ = -(Eᵢ-Eᵢ₋₁)+Cᵢ)                            │
│        → REDUCE CALCULATION LOAD                   │
└────────────────────────────────────────────────────┘
                     │
                     ▼                          S12
┌────────────────────────────────────────────────────┐
│      DIVISION POSITION DETERMINATION PROCESSING    │
│                                                    │
│   DETERMINE DIVISION POSITION WHILE CONSIDERING    │
│           AVERAGE SIZE OF CHUNKS                   │
└────────────────────────────────────────────────────┘
                     │
                     ▼
        ╭─────────────────────────╮
        │           END           │
        ╰─────────────────────────╯
```

S11 — ENERGY FIELD CALCULATION PROCESSING

· LOCALIZE CALCULATION OF COMPLEXITY E
· CALCULATE ONLY INCREASE AMOUNT OF COMPLEXITY E
· CONSIDER CONTINUITY C
$(P_i = -(E_i - E_{i-1}) + C_i)$
→ REDUCE CALCULATION LOAD

S12 — DIVISION POSITION DETERMINATION PROCESSING

DETERMINE DIVISION POSITION WHILE CONSIDERING AVERAGE SIZE OF CHUNKS

# FIG. 17

115

| STRING NUMBER j | 0 | 1 | 2 | 3 | 4 | 5 |
|---|---|---|---|---|---|---|
| OFFSET VALUE off | 1 | 2 | 3 | 5 | 7 | 11 |
| WEIGHT W | 25 | 22 | 18 | 10 | 4 | 1 |

# FIG. 18

```
ENERGY FIELD CALCULATION
       PROCESSING
```

S21
DIVIDE FILE INTO BYTE STRINGS $D_0$, $D_1$, ...

S22
INITIALIZE PROCESSING POSITION
$i \leftarrow 11$

S23
INITIALIZE CONTINUITY COUNTERS
$c0 \leftarrow 0$, $c1 \leftarrow 0$

S24
CALCULATE COMPLEXITY $E_i$

$$E_i = \sum_i \{ W_j \times |D_i - (D_i - off_j)| \}$$

S25
$i \leftarrow i + 1$
$E_{i-1} \leftarrow E_i$

S26
FILE END? — YES

NO

S27
CALCULATE COMPLEXITY $E_i$

S28
CONTINUITY COUNTER UPDATING
PROCESSING

S29
CALCULATE ENERGY VALUE $P_i$
$P_i = -(E_i - E_{i-1}) + a0 \times c0 + a1 \times c1$
(Example: $a0 = 100$, $a1 = 10$)

End

# FIG. 19

```
        ┌──────────────────────────┐
        │   CONTINUITY COUNTER      │
        │   UPDATING PROCESSING     │
        └──────────────────────────┘
                    │
                    ▼
              ╱──────────────╲  S31
             ⟨   D_i = 0 ?    ⟩────── NO ──────┐
              ╲──────────────╱                 │
                    │ YES                       │
                    ▼  S32                       ▼  S33
        ┌──────────────────────┐    ┌──────────────────────┐
        │    c0 ← c0 + 1       │    │       c0 ← 0         │
        └──────────────────────┘    └──────────────────────┘
                    │                            │
                    │◄───────────────────────────┘
                    ▼
              ╱──────────────╲  S34
             ⟨  D_i ≤ 127?    ⟩────── NO ──────┐
              ╲──────────────╱                 │
                    │ YES                       │
                    ▼  S35                       ▼  S36
        ┌──────────────────────┐    ┌──────────────────────┐
        │    c1 ← c1 + 1       │    │       c1 ← 0         │
        └──────────────────────┘    └──────────────────────┘
                    │                            │
                    │◄───────────────────────────┘
                    ▼
              ┌──────────┐
              │   END    │
              └──────────┘
```

The flowchart reads:

CONTINUITY COUNTER UPDATING PROCESSING

- S31: $D_i = 0$ ?
  - YES → S32: $c0 \leftarrow c0 + 1$
  - NO → S33: $c0 \leftarrow 0$
- S34: $D_i \leq 127$?
  - YES → S35: $c1 \leftarrow c1 + 1$
  - NO → S36: $c1 \leftarrow 0$
- END

# FIG. 20

171

P

EXTENDED
SEARCH RANGE

$P_i$ ············································

$P_{min}$ ································

$S_{min}$

$S_{ave}$

$i_0$      $i_{min}$      $i$

X'

PROCESSING
START POSITION
(CHUNK START
POINT)

POSITION OF
CURRENT
MINIMUM POINT

CURRENT
PROCESSING
POSITION

WHEN $i - i_{min} \geq S_{ave} - (i - i_0) \times S_{ave}/S_{max}$, $i$ IS SET AS
DIVISION POSITION

MAXIMUM VALUE OF EXTENDED
SEARCH DISTANCE
$= S_{ave} - (i - i_0) \times S_{ave} / S_{max}$

172

$S_{ave}$

$S_{min}$      $S_{ave}$      $S_{max}$

DISTANCE FROM CHUNK START POINT $= i - i_0$

# FIG. 21

```
┌────────────────────────────────┐
│      DIVISION POSITION          │
│   DETERMINATION PROCESSING      │
└────────────────────────────────┘
```

S41

OBTAIN ENERGY VALUES $P_0$ AND $P_1$

S42

$i_0 \leftarrow 0$, $i \leftarrow S_{min}$

S43

$P_{min} \leftarrow P_i$, $i_{min} \leftarrow i$

S44

FILE END? ─── YES

NO

S45

$P_i < P_{min}$ ? ─── NO

YES

S46

$P_{min} \leftarrow P_i$, $i_{min} \leftarrow i$

S47

$i - i_{min} \geq S_{ave} - (i - i_0) \times S_{ave} / S_{max}$ ? ─── YES

NO

S48

$i \leftarrow i + 1$

S49

DETERMINE $i_{min}$ AS DIVISION POSITION

S50

$i_0 \leftarrow i_{min}$, $i \leftarrow i_{min} + S_{min}$

End

# FIG. 22

```
        ( FILE WRITE PROCESSING )
                    │
                    ▼                        ⌐ S61
        ┌───────────────────────────────┐
        │      CHUNKING PROCESSING       │
        └───────────────────────────────┘
                    │
                    ▼                        ⌐ S62
        ┌───────────────────────────────┐
        │ SELECT CHUNK AND CALCULATE     │
        │         HASH VALUE             │
        └───────────────────────────────┘
                    │
                    ▼                        ⌐ S63
        ┌───────────────────────────────┐
        │   ADD RECORD TO CHUNK MAP      │
        │            TABLE               │
        └───────────────────────────────┘
                    │
                    ▼                        ⌐ S64        NO
        < CHUNK DATA IS PRESENT? >────────────────────( A )
                    │ YES
                    ▼                        ⌐ S65
        ┌───────────────────────────────┐
        │   UPDATE RECORD IN CHUNK MAP   │
        │            TABLE               │
        └───────────────────────────────┘
                    │
                    ▼                        ⌐ S66
        ┌───────────────────────────────┐
        │   COUNT UP REFERENCE COUNTER   │
        └───────────────────────────────┘
                    │                        ( B )
                    ▼                        ⌐ S67
   NO   < ALL CHUNKS HAVE BEEN PROCESSED? >
                    │ YES
                    ▼
              (    END    )
```

# FIG. 23

(A)

↓

**S71**
OBTAIN LARGEST GROUP NUMBER

↓

**S72**
SIZE IS EQUAL TO OR LARGER THAN PREDETERMINED VALUE? — YES →

**S73**
COUNT UP GROUP NUMBER

NO ↓

**S74**
UPDATE RECORD IN CHUNK MAP TABLE

↓

**S75**
ADD RECORD TO CHUNK META TABLE

↓

**S76**
ADD RECORD TO CHUNK DATA TABLE

↓

**S77**
SIZE IS EQUAL TO OR LARGER THAN PREDETERMINED VALUE? — YES →

**S78**
SET CHUNK GROUP TO INACTIVE
(SET CHUNK GROUP AS TRANSFER TARGET)

NO ↓

(B)

# FIG. 24

```
        ┌─────────────────────────┐
        │     CLOUD TRANSFER      │
        │      PROCESSING         │
        └─────────────────────────┘
                     │
                     ▼                    ⌐ S81
        ┌─────────────────────────────────┐
        │  DETERMINE CHUNK GROUP TO BE    │
        │         TRANSFERRED             │
        └─────────────────────────────────┘
                     │
                     ▼                    ⌐ S82
        ┌─────────────────────────────────┐
        │    GENERATE CHUNK GROUP OBJECT  │
        └─────────────────────────────────┘
                     │
                     ▼                    ⌐ S83
        ┌─────────────────────────────────┐
        │ TRANSMIT CHUNK GROUP OBJECT TO  │
        │        CLOUD STORAGE            │
        └─────────────────────────────────┘
                     │
                     ▼
              ┌─────────────┐
              │     END     │
              └─────────────┘
```

Europäisches
Patentamt

European
Patent Office

Office européen
des brevets

# EUROPEAN SEARCH REPORT

Application Number

EP 20 19 4080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/133561 A1 (DUBNICKI CEZARY [US] ET AL) 5 June 2008 (2008-06-05) * paragraphs [0004] - [0011], [0061], [0063], [0067], [0070], [0103]; figures 2,3B,15 * | 1-12 | INV. G06F3/06 |
| A | EP 3 495 964 A1 (FUJITSU LTD [JP]) 12 June 2019 (2019-06-12) * the whole document * | 1-12 | |

TECHNICAL FIELDS
SEARCHED (IPC)

G06F

The present search report has been drawn up for all claims

| Place of search | Date of completion of the search | Examiner |
|---|---|---|
| The Hague | 27 January 2021 | Limacher, Rolf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 4080

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2021

| Patent document cited in search report | | Publication date | Patent family member(s) | | Publication date |
|---|---|---|---|---|---|
| US 2008133561 | A1 | 05-06-2008 | AU 2007329612 A1 | | 12-06-2008 |
| | | | CA 2670400 A1 | | 12-06-2008 |
| | | | CN 101595459 A | | 02-12-2009 |
| | | | EP 2089800 A2 | | 19-08-2009 |
| | | | JP 5154567 B2 | | 27-02-2013 |
| | | | JP 2010515114 A | | 06-05-2010 |
| | | | KR 20090085157 A | | 06-08-2009 |
| | | | TW 200832938 A | | 01-08-2008 |
| | | | US 2008133561 A1 | | 05-06-2008 |
| | | | WO 2008070484 A2 | | 12-06-2008 |
| EP 3495964 | A1 | 12-06-2019 | EP 3495964 A1 | | 12-06-2019 |
| | | | JP 2019095986 A | | 20-06-2019 |
| | | | US 2019155927 A1 | | 23-05-2019 |

EPO FORM P0459

For more details about this annex : see Official Journal of the European Patent Office, No. 12/82

**EP 3 792 744 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014514618 A
- JP 2011065268 A